# EUROPÄISCHE PATENTSCHRIFT

(11) **EP 0 457 791 B1**
(45) Veröffentlichungstag und Bekanntmachung des Hinweises auf die Patenterteilung: **06.10.1993**
(21) Anmeldenummer: 90902627.0
(22) Anmeldetag: 12.02.1990
(51) Int. Cl.: E21B 25/10, E21B 10/02, G01N 1/08

(54) **GERÄT ZUR ENTNAHME VON BODENPROBEN**
DEVICE FOR TAKING SOIL SAMPLES
DISPOSITIF POUR PRELEVER DES ECHANTILLONS DE SOL

(30) Priorität: 11.02.1989 DE 3904105; 16.11.1989 DE 3938166; 11.01.1990 DE 4000677
(43) Veröffentlichungstag der Anmeldung: 27.11.1991
(73) Patentinhaber: Georg Fritzmeier GmbH & Co., D-85655 Grosshelfendorf (DE)
(72) Erfinder: RÖDEL, Gerhard, D-8050 Freising (DE); SCHURIG, Manfred, D-8050 Freising (DE)
(74) Vertreter: Tiedtke, Harro, Dipl.-Ing.
(86) Internationale Anmeldenummer: EP9000226
(87) Internationale Veröffentlichungsnummer: WO9009508

(56) Entgegenhaltungen:
- DE-A- 1 208 527
- GB-A- 2 152 100
- US-A- 3 817 338
- US-A- 4 333 541

## Beschreibung

Die Erfindung bezieht sich auf ein Gerät zur Entnahme von Bodenproben gemäß dem Oberbegriff des Patentanspruchs 1.

Die Überdüngung des Bodens landwirtschaftlicher Nutzflächen und die damit verbundene Belastung der Gewässer wird in letzter Zeit in der Öffentlichkeit zunehmend diskutiert. Die landwirtschaftlichen Betriebe gehen in immer größerem Maße dazu über, regelmäßig Bodenuntersuchungen durchzuführen. Durch die Untersuchung auf Nährstoffe und einen Wechsel der Anbauprodukte läßt sich die Düngung optimieren und eine Auslaugung des Bodens vermeiden. Es läßt sich feststellen, ob die Bodenstruktur intakt, der Boden gut durchlüftet ist und ob der Boden einen ausreichenden Anteil an Humus enthält.

Bisher erfolgte die Entnahme von Proben mit Sonden, die in den Boden eingetrieben und dann unter Mitnahme des von der Sonde umschlossenen Bodenquerschnitts gehoben werden.

Bisher verwendete Sonden, wie sie beispielsweise aus der DE-A- 25 45 851 bekannt sind, haben einen Rohrmantel, der an seinem fußseitigen Endabschnitt eine auswechselbare Spitze trägt. Der vom Rohrmantel gebildete Aufnahmeraum ist zur Sondenspitze hin mit einer Verschlußklappe verschließbar, mit der beim Herausziehen der Sonde der Probenkörper selbsttätig in der Sonde einschließbar ist. Bei der Verwendung derartiger Sonden hat es sich jedoch gezeigt, daß die Verschlußklappe bei hochviskosen Böden mit einer sehr großen Federkraft vorgespannt werden muß, um den Probenkörper zuverlässig im Inneren der Sonde zu halten. Durch die große Federvorspannung besteht allerdings die Gefahr, daß die Bodenprobe durch die Verschlußklappe beschädigt oder in ihrem Aufbau gestört wird. Bei der Verwendung eines koaxial im Rohrmantel angeordneten Behältnisses zur Aufnahme des Probenkörpers muß die Lagerung der Verschlußklappe durch das Behältnis geführt werden, wodurch der konstruktive und apparatetechnische Aufwand einer Sonde wesentlich erhöht ist.

Aus der DE-A- 1 208 527 ist ein Gerät zur Entnahme von Bodenproben bekannt, bei dem der Durchgangskanal der Sondenspitze über eine Radialschulter erweitert ist und in den eine von in Axialrichtung angeordneten, federnden Lippen gebildete Rückschlageinrichtung ragt. Diese sind derart im Durchgangskanal angeordnet, daß sie zum Rückhalten der Probe mittig zur Sondenachse hin ausknicken und dabei den Probenkörper abtrennen.

In der GB-A- 2 152 100 ist ein Gerät zur Bodenprobenentnahme gezeigt, bei dem am Außenumfang des Rohrmantel-Durchgangskanals eine Vielzahl von Blattfedern als Rückschlageinrichtung verteilt sind, die in Form eines Konus in den Durchgangskanal ragen. Diese werden beim Eintreiben des Geräts durch die in den Rohrmantel eintretende Bodenprobe zur Wandung des Durchgangskanals hin ausgelenkt. Beim Herausziehen des Geräts federn die Blattfedern aufgrund ihrer Federsteifigkeit in ihre Ausgangsstellung zurück, wodurch die sich oberhalb der Rückschalgeinrichtung befindliche Bodenprobe vom umliegenden Boden abgetrennt wird.

Der Probenkörper wird bei allen vorbeschriebenen Einrichtungen sowohl beim Eintreiben als auch beim Herausziehen des Geräts in seinen Gefügeeigenschaften gestört, so daß eine nachfolgende Gefügeuntersuchung mit Fehlern behaftet ist.

Der Erfindung liegt die Aufgabe zugrunde, ein Gerät zur Entnahme von Bodenproben zu schaffen, mit dem bei geringem vorrichtungstechnischen Aufwand eine hinsichtlich der Bodeneigenschaften unverfälschte Probenentnahme gewährleistet ist.

Diese Aufgabe ist erfindungsgemäß durch die Merkmale des Patentanspruchs 1 gelöst.

Beim Einsatz des erfindungsgemäßen Geräts zur Entnahme von Bodenproben hat es sich gezeigt, daß durch die erfindungsgemäßen Maßnahmen die Wechselwirkungen zwischen dem Probenkörper und den sich mit diesem in Kontakt befindlichen Bauteilen des Erfindungsgegenstands im Vergleich zu bekannten Vorrichtungen auf ein Minimum reduzieren lassen, so daß die Eigenschaften der Bodenprobe, insbesondere deren Gefügeeigenschaften nicht verfälscht werden. Erfindungsgemäß kann der Rohrmantel selbst als Behältnis zur Aufbewahrung des Probenkörpers benutzt werden, indem die Spitze und die Handhabungseinrichtung abgenommen werden und der Rohrmantel durch geeignete Verschlußkappen verschlossen wird.

Bei der Verwendung des erfindungsgemäßen Geräts in Verbindung mit einem Handlingsgerät, ist es aufgrund des einfachen Aufbaus vorteilhaft, wenn sich die Spitze gemäß den Patentansprüchen 3 und 4 bündig an den Rohrmantel anschließt, wobei vorteilhafterweise gemäß Patentanspruch 4 im Inneren des Rohrmantels ein Behältnis zur Aufnahme des Probenkörpers vorgesehen ist.

Die Merkmalskombination der Patentansprüche 5 und 6 läßt sich vorzugsweise bei Handbohrstöcken anwenden, da einerseits durch die Maßnahmen gemäß Patentanspruch 6 eine stabile Verbindung zwischen Spitze und Rohrmantel erreicht wird und andererseits durch den doppelkegelförmigen Aufbau des Mantels der Spitze das Herausziehen der Sonde aus dem Boden erleichtert ist.

Durch verschiedene Anstellwinkel der Schneide zur Sondenachse kann die Sondenspitze an unterschiedliche Bodenbeschaffenheiten angepaßt werden.

Durch die Maßnahme gemäß den Patentansprüchen 8 und 9, den sich unterhalb der Sondenspitze befindlichen Volumenanteil der Probenbohrung über eine in der Sonde ausgebildete Ausnehmung zu entlüften, wird beim Herausziehen der Sonde die Bildung eines Vakuums verhindert und somit die zum Herausziehen aufzuwendenden Kräfte wesentlich verringert. Derartige Ausnehmungen sind auf einfache Weise zu reinigen, so daß ihre Wirkung auch bei Böden mit hohen Adhäsionskräften zum Sondenmaterial gewährleistet ist.

Von besonderem Vorteil ist es, die Rückschlageinrichtung gemäß Patentanspruch 11 an einem Ringkörper zu befestigen. Dieser stützt sich in der Durchgangsbohrung der Spitze ab und dient seinerseits zur Axialabstützung des Rohrmantels. Durch diese Maßnahme kann die Sonde durch Auswechseln der Rückschlageinrichtung auf einfache Weise an unterschiedliche Bodenbeschaffenheiten angepaßt werden.

Vorteilhafterweise sind gemäß Patentanspruch 12 zwei Behältnisse in Form von Hülsen mit vorbestimmter Länge unmittelbar aneinanderschließend in der Sonde angeordnet. Durch diese Weiterbildung können durch ein einmaliges Eintreiben der Sonde zwei Probenkörper aus unterschiedlichen Bodenschichten entnommen und damit die Eigenschaften des Bodens in Abhängigkeit von der Bodenschicht ermittelt werden.

Ein besonders einfacher Aufbau der Sonde ergibt sich gemäß Patentanspruch 13, wenn an deren oberen Ende eine Gelenkmanschette angeordnet ist, die ihrerseits lösbar an einer Handhabungseinrichtung angelenkt ist, die die Sonde in unverschwenktem Zustand verschließt und gleichzeitig als Widerlager für die Hülsen dient, wobei mit der Weiterbildung nach Patentanspruch 14 das Herausnehmen der Hülsen wesentlich erleichtert ist.

Von besonderem Vorteil ist es, wenn gemäß Patentanspruch 16 ein Schlagaufsatz über eine Muffe auf den Rohrmantel wirkt und auf diese Weise einer Beschädigung des Rohrmantels durch unmittelbare Schlageinwirkung vorgebeugt ist. Durch Auswechseln der Muffe und der Spitze gegen Verschlußstücke läßt sich der Rohrmantel als Aufbewahrungsbehältnis für den Probenkörper nutzen. Für eine weitere Probenentnahme werden die Muffe und die Spitze auf einen unbenutzten Rohrmantel aufgeschraubt.

Mit Rücksicht auf eine ständige Bodenüberwachung ist es nach Patentanspruch 17 vorteilhaft, wenn die Sonde als Teil eines transportablen Spezialgeräts mechanisch durch beispielsweise kontinuierlichen Druck in den Boden eingetrieben wird und ein solches Spezialgerät z.B. als Anbaugestell für ein geländegängiges Fahrzeug, insbesondere einen Traktor ausgestaltet ist, um größtmögliche Mobilität bei sofortiger Einsatzbereitschaft zu gewährleisten.

Zur laborgerechten Aufbereitung der Probenkörper an Ort und Stelle oder zur sofortigen Untersuchung der Probenkörper ist es vorteilhaft, eine Zerkleinerungseinrichtung vorzusehen, mittels der die Probenkörpersätze zerkleinert und in der Zusammensetzung homogenisiert werden können.

Mit der Ausführungsform gemäß Patentanspruch 20 ist ein besonders einfach aufgebauter Handbohrstock gebildet, der mit einem gegenüber den bekannten Handbohrstöcken wesentlich verringerten Widerstand in den Boden eintreibbar bzw. aus diesem herausziehbar ist.

Eine Verwendung von Sonden mit einer Spitze gemäß Patentanspruch 22 gewährleistet eine Probennahme mit minimalem Kraftaufwand, wobei der Probenkörper durch Verwendung einer Rückhalteeinrichtung gemäß Patentanspruch 21 beim Herausziehen der Sonde aus dem Erdreich zuverlässig im Inneren der Sonde gehalten werden kann.

Die Erfindung wird nachstehend anhand schematischer Zeichnungen an mehreren Ausführungsbeispielen näher erläutert.

Es zeigen:
- Fig. 1: eine Übersichtsdarstellung eines von einem Traktor getragenen Gerätes zur Probennahme,
- Fig. 2: eine Schnittansicht des Fußendes eines Ausführungsbeispiels einer Sonde,
- Fig. 3 bis Fig. 5: Teilschnitte bevorzugter Ausführungsbeispiele der Spitze der Sonde,
- Fig. 6: eine Schnittansicht des oberen Endes der Sonde aus Fig. 2,
- Fig. 7: eine Schnittdarstellung einer Zerkleinerungs- und Mischeinrichtung,
- Fig. 8: eine Ansicht eines weiteren Ausführungsbeispiels der Sonde zur Verwendung als Handbohrstock,
- Fig. 9: eine vorteilhafte Weiterbildung des Ausführungsbeispiels aus Fig. 8,
- Fig. 10: eine schematische Darstellung eines weiteren Aus führungsbeispiels eines Handbohrstocks,
- Fig. 11: eine Zusammenstellungszeichnung des Ausführungsbeispiels eines Handbohrstocks aus Fig. 10,
- Fig. 12 und 13: Ausführungsbeispiele von Spitzen des erfindungsgemäßen Geräts zur Entnahme von Bodenproben,
- Fig. 14: einen Rohrmantel des Ausführungsbeispiels aus Fig. 11,
- Fig. 15: eine Muffe des Ausführungsbeispiels aus Fig. 11,
- Fig. 16: einen Schlagaufsatz des Ausführungsbeispiels aus Fig. 11,
- Fig. 17: eine Zusammenstellungszeichnung eines weiteren Ausführungsbeispiels eines Handbohrstocks.
- Fig. 18: eine Draufsicht auf die Spitze des Handbohrstocks aus Fig. 17;
- Fig. 19: eine Seitenansicht der Spitze des Handbohrstocks aus Fig. 18; und
- Fig. 20: eine erfindungsgemäße Rückschlageinrichtung mit einem Ringkörper.

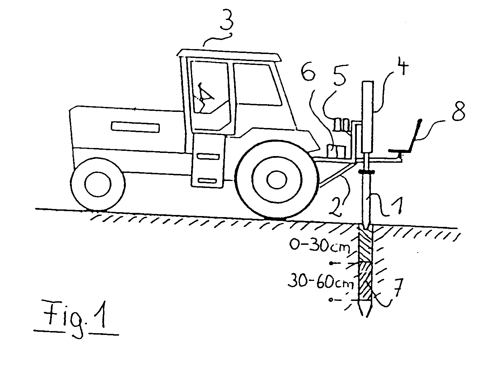

Zur zuverlässigen Beurteilung landwirtschaftlicher Nutzflächen ist es notwendig, die Bodenbeschaffenheit durch die Entnahme einer großen Anzahl von Bodenproben zu untersuchen. Um möglichst viele Proben in kurzer Zeit und mit konstanten Entnahmeparametern entnehmen zu können, ist es vorteilhaft, ein weitgehend automatisiertes Bodenprobenentnahmegerät gemäß Fig. 1 einzusetzen, wobei das im folgenden beschriebene Grundprinzip auch bei anderen Materialien, wie z.B. Silagen o.ä., anwendbar ist.

Bei einem bevorzugten Ausführungsbeispiel der Erfindung ist eine Sonde 1 zur Probennahme an einem Gestell 2 befestigt, das an einem geländegängigen Fahrzeug, beispielsweise an einem Traktor 3, angeordnet ist. Das Gestell 2 trägt einen doppeltwirkenden Hydraulikzylinder 4 mit eigener, fahrzeugunabhängiger Hydraulikanlage und Stromversorgung (hier nicht gezeigt), der mit der Sonde 1 operativ verbunden ist, und mittels dem die Sonde 1 in eine gewünschte Tiefe in den Boden eintreibbar und wieder herausziehbar ist. An dem Gestell 2 sind im Bereich der Sonde 1 zwei Probenbehälter 5 für Proben aus zwei unterschiedlichen Schichttiefen vorgesehen. Die Probenbehälter sind z.B. Kunststoffbeutel, die zur Aufnahme von jeweils einem Probensatz dienen, wobei jeder Probensatz aus Probenkörpern 7 einer vorbestimmten Bodenschicht (z.B. 0-30 cm, 30-60 cm) besteht. Jedem Probenbehälter 5 ist ein Sammelbehälter 6 zur Aufbewahrung von mehreren Probensätzen zugeordnet. Um Umwelteinflüsse zuverlässig auszuschalten, sind die Sammelbehälter 6 vorzugsweise als Kühlbehälter ausgeführt, in denen die Probenkörper 7 auf einer konstanten Temperatur, beispielsweise 2-3°C, gehalten werden können. Im Bereich der Sonde 1 ist eine Sitzeinrichtung 8 angebracht, von der aus eine Bedienperson das Gerät zur Probennahme bedienen kann.

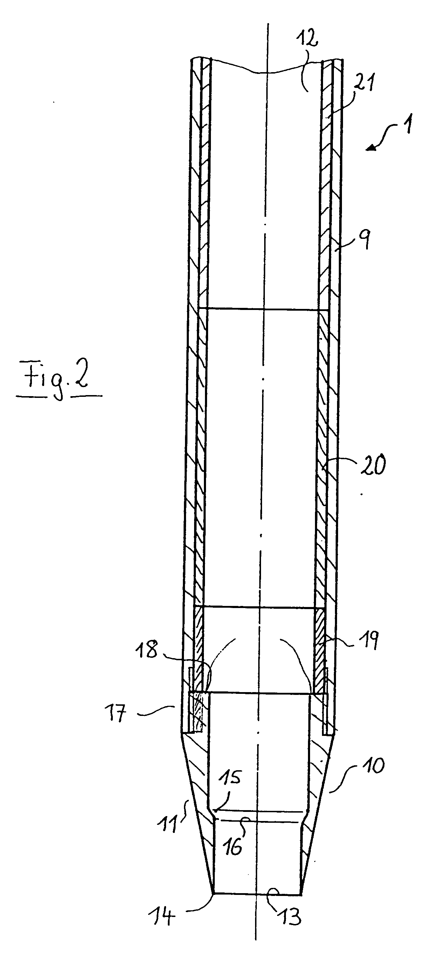

Die Sonde 1 hat einen zylinderförmigen Rohrmantel 9 (s. Fig. 2), dessen Fußende mit einer Spitze 10 derart verschraubt ist, daß deren Außenumfangsfläche unmittelbar an die Mantelfläche des Rohrmantels 9 anschließt. Ein im wesentlichen zylinderförmiger Durchgangskanal 12 zur Aufnahme des Probenkörpers 7 durchsetzt die Sonde 1 in Axialrichtung. Um den Verschleiß und eine Verfälschung der Proben durch Korrosion der Sonde o.ä. zu minimieren, bestehen sowohl die Spitze 10 als auch der Rohrmantel 9 vorzugsweise aus Edelstahl. Der Kopf 11 der Spitze 10 hat eine kegelstumpfförmige Mantelfläche mit einem Kegelwinkel β von beispielsweise 24°, die an ihrem Öffnungsquerschnitt 13 mit der Wandung des Durchgangskanals 12 eine Schneide 14 bildet. Der Öffnungsquerschnitt 13 verläuft bei diesem Ausführungsbeispiel senkrecht zur Sondenachse. Um einen Stau des Probenkörpers durch Reibung an der Umfangsfläche des Durchgangskanals zu verhindern, ist der Durchgangskanal 12 in einem vorbestimmten Abstand vom Öffnungsquerschnitt 13 über eine Radialschulter 15 erweitert. Zur Vergleichmäßigung des Fließens des Probenkörpers im Inneren der Sonde ist die näher an der Sondenachse angeordnete Umfangskante 16 der Radialschulter 15, vorzugsweise mit einem Radius von 2 mm, abgerundet. Ein Montageabschnitt 17 an dem dem Öffnungsabschnitt 13 gegenüberliegenden Ende der Spitze 10 besteht aus einem gegenüber der angrenzenden Umfangskante der Mantelfläche der Spitze 10 radial zurückgesetzten zylinderförmigen Ansatz. Dieser trägt ein Außengewinde, das mit einem Innengewinde des Rohrmantels 9 in Eingriff steht, wobei einAbschnitt 18 des Endquerschnitts in verschraubtem Zustand in das Innere des Durchgangskanals 12 vorsteht. An diesem Abschnitt 18 ist eine Abstandshülse 19 abgestützt, deren innere Umfangsfläche sich an den Durchgangskanal 12 der Spitze 10 anschließt. Die Abstandshülse 19 bildet ihrerseits einen Axialanschlag für eine untere Hülse 20, auf der sich wiederum eine obere Hülse 21 abstützt. Durch die übereinander angeordneten Hülsen 20,21 können mit einem Sondeneinstich Bodenproben aus zwei übereinanderliegenden Bodenschichten entnommen werden. Die beiden Hülsen 20,21 können von dem oberen, offenen Ende 22 der Sonde 1 her eingeschoben werden. Mittels der Abstandshülse 19 läßt sich die Innenlänge der Sonde 1 an verschiedene Hülsenlängen anpassen.

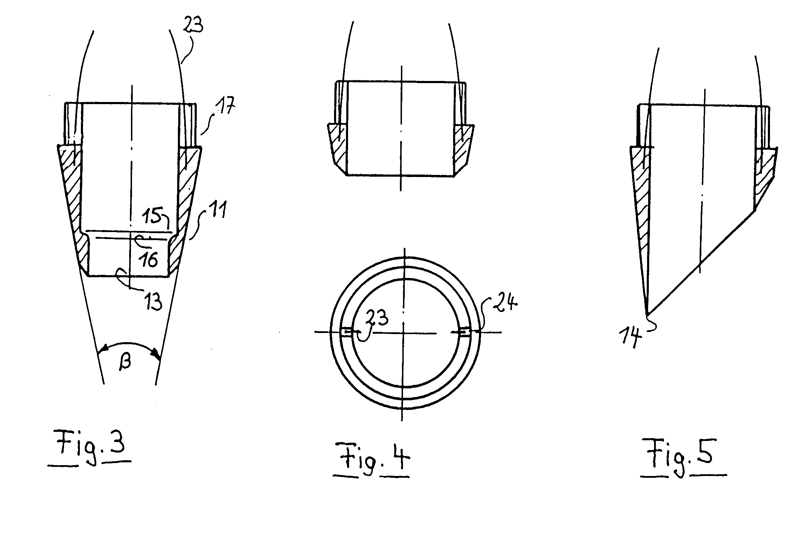

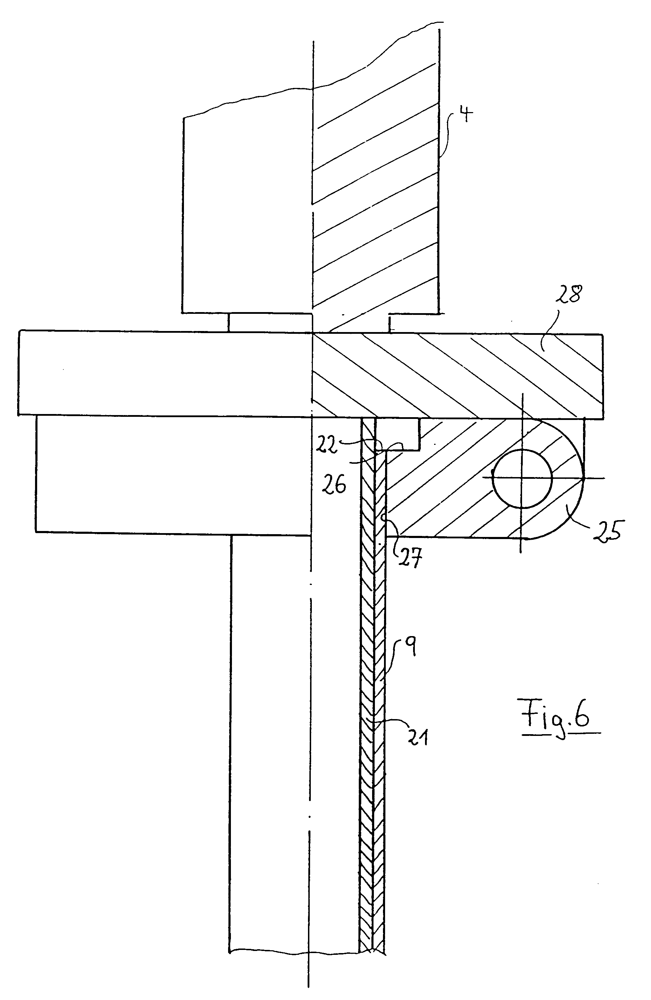

Je nach Zusammensetzung und Viskosität des zu untersuchenden Bodens können gemäß den Fig. 3 bis 5 unterschiedliche Spitzen 10 in den Rohrmantel 9 eingeschraubt werden. Bei der Prüfung von Sandböden ist es beispielsweise vorteilhaft, den Öffnungsquerschnitt 13 zur Sondenachse um einen Winkel von ca. 45° anzustellen (Fig. 5) und den Durchgangskanal 12 in der Spitze 10 ohne Radialschulter 15 auszubilden. Für niedrigviskose Materialien oder wäßrige Böden genügt es, eine Spitze 10 mit einem kurzen Kopf 11 (s. Fig. 4) einzusetzen, da das Eintreiben der Sonde nur geringe Kräfte benötigt. Auch bei diesem Ausführungsbeispiel ist keine Radialschulter 15 vorgesehen. Zur stabileren Ausbildung der Schneide 14 kann der Kopf 11 gemäß den Fig. 3 und 4 um den Öffnungsquerschnitt 13 mit einem Winkel von vorzugsweise 45° angefast sein.

Um zu vermeiden, daß der Probenkörper 7 beim Anheben der Sonde 1 aus dieser herausrutscht, kann an dem Montageabschnitt 17 eine in den Durchgangskanal 12 ragende Rückschlageinrichtung 23 vorgesehen sein (s. Fig. 4). Vorzugsweise besteht diese bei hochviskosen Proben aus zwei bogenförmigen Federdrähten, die in zwei diametral gegenüberliegenden Axialnuten 24 verankert sind und sich über das Ende des Montageabschnitts 17 hinaus erstrecken.

Bei niedrigviskosen Proben wird vorteilhafterweise eine Gummimanschette als Rückschlageinrichtung 23 verwendet.

Am oberen Ende 22 des Rohrmantels 9 ist nach Fig. 6 eine Gelenkmanschette 25 befestigt, wobei der offene Endquerschnitt des Rohrmantels 9 von einer Bohrung 27 in der Gelenkmanschette umfaßt ist und bündig in der Bodenfläche einer Einsenkung 26 in der Gelenkmanschette 25 endet. Die Gelenkmanschette 25 ist lösbar an einer Handhabungseinrichtung 28 angelenkt, wobei die Handhabungseinrichtung 28 das Ende des Kolbens des Hydraulikzylinders 4 ist und im verschwenkten Zustand die Sonde 1 verschließt. Die Länge der beiden Hülsen 20,21 und der Abstandshülse 19 ist so bemessen, daß der Endquerschnitt der oberen Hülse 21 bei verschlossener Sonde 1 an der Handhabungseinrichtung 28 anliegt, so daß die Hülsen 19,20,21 axial in der Sonde festgelegt sind. Der Außendurchmesser der oberen und der unteren Hülse 20,21 ist mit geringem Spiel an den Innendurchmesser des Rohrmantels 9 angepaßt. Zur einfacheren Zuführung und Entnahme der Hülsen 20,21 steht die Umfangsfläche der Einsenkung 26 in einem Radialabstand zu der Umfangsfläche der Bohrung 27, wodurch ein oberer Abschnitt der oberen Hülse 21 bei verschwenkter Sonde 1 zugänglich ist. Die Gelenkmanschette 25 kann in unverschwenktem Zustand mit einer (nicht gezeigten) Arretiervorrichtung, beispielsweise einer Sperrklinke oder einem Sicherungsbolzen formschlüssig mit der Handhabungseinrichtung 28 verbunden werden.

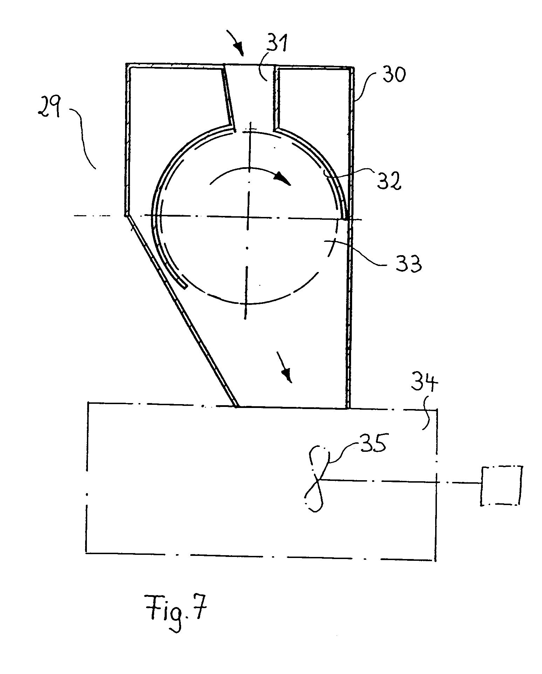

Um die Probenkörper 7 am Ort der Probennahme aufzubereiten, kann an dem Gestell 2 ein Zerkleinerungs- und Mischeinrichtung 29 (s.Fig. 7) vorgesehen werden. Diese besteht z.B. aus einem Gehäuse 30, das an seinem oberen Bereich eine vorzugsweise trichterförmige Zuführöffnung 31 hat, die in einen Zerkleinerungsraum 32 mündet. In diesem ist ein Zerkleinerungselement 33, vorzugsweise eine scheibenförmige Drahtbürste, drehbar gelagert, die, beispielsweise durch eine regelbare Antriebseinrichtung mit einer geeigneten Drehzahl antreibbar ist, wobei die Antriebseinrichtung an die unabhängige Stromversorgung des Gestells 2 angeschlossen ist. Die Gehäusewand des Zerkleinerungsraums 32 steht zumindest abschnittsweise in geringem Abstand zu den Umfangs- und Seitenflächen des Zerkleinerungselements 33. Der Zerkleinerungsraum kann zur Homogenisierung der zerkleinerten Probe in einen Mischbehälter 34 mit einem angetriebenen Mischorgan 35 münden.

Im folgenden wird die prinzipielle Funktionsweise des Anmeldungsgegenstandes anhand des Ausführungsbeispieles aus Fig. 1 beschrieben.

Zur Ermittlung bestimmter Bodeneigenschaften wurden Entnahmevorschriften entwickelt. So müssen zur Stickstoffuntersuchung z.B. folgende Punkte beachtet werden:
a) ein Probensatz besteht aus 15 Probenkörpern, d.h. 15 Einstiche in den Boden,
b) die Proben müssen nach einem bestimmten Muster aus dem Boden entnommen werden,
c) an jeder Einstichstelle werden zwei Schichttiefen entnommen,
d) die Probensätze aus jeder Schicht müssen jeweils in einem gesonderten Behälter gesammelt werden,
e) die gefüllten Behälter müssen wiederum bis zur Verarbeitung im Labor bei 2-3°C aufbewahrt werden.

Mit dem Anmeldungsgegenstand in der Ausführung gemäß den Fig. 1 bis 7 lassen sich alle in den Punkten a) bis e) aufgeführten Schritte vor Ort und mit großer Schnelligkeit durchführen, wobei das Probenentnahmegerät von einem geländegängigen Fahrzeug, z.B. einem Traktor getragen wird. Das Gerät kann von der Sitzeinrichtung 8 aus von einer Bedienperson bedient werden. Zunächst wird die für den Boden geeignete Spitze 1 in den Rohrmantel eingeschraubt. Dabei ist die Sonde 1 gegenüber der Handhabungseinrichtung 28 um 90° verschwenkt, so daß das obere Ende 22 der Sonde 1 geöffnet ist. In diese Öffnung werden nacheinander zwei Hülsen 20,21 mit einer Länge von jeweils 30 cm eingeschoben, wobei sich die untere Hülse 21 auf der Abstandshülse 19 abstützt. Die Sonde wird anschließend zurückgeschwenkt, so daß die Handhabungseinrichtung 28 die Sonde 1 verschließt und die Hülsen 20,21 axial festgelegt sind. Die Sonde wird mittels des Hydraulikzylinders 4 in den Boden getrieben. Dabei wird der von dem Durchgangskanal 12 überdeckte Bodenkern fortschreitend in das Innere der Hülsen 20,21 hineingedrückt. Da sich der Durchgangskanal 12 über die Radialschulter 15 in der Relativbewegungsrichtung des Bodenkerns erweitert, kann er sich nach dem Passieren der Radialschulter in Radialrichtung entspannen, wobei das Fließen des Bodenkerns durch die Abrundung der Umfangskanten 16 der Radialschulter 15 vorteilhaft beeinflußbar ist. Mit diesen Maßnahmen kann ein Aufstauen des Bodenkerns im Sondeninneren und eine Verdichtung der Probe zuverlässig verhindert werden. Nach dem Erreichen der gewünschten Eintreibtiefe (hier etwa 60 cm), wird die Sonde durch den Hydraulikzylinder 4 aus dem Erdreich gezogen. Beim Eintreiben der Sonde 1 werden die Federdrähte des Rückhalteverschlusses 23 durch den eintretenden Bodenkern in Richtung zur Mantelfläche des Durchgangskanals 12 gebogen. Beim Heben der Sonde 1 rutscht der Bodenkern in den Hülsen 20,21 zunächst in Richtung des Öffnungsquerschnitts 13 der Sonde 1. Dadurch werden die Federn 23 derart verspreizt, daß sie ein weiteres Abrutschen des Bodenkerns in den Hülsen 20,21 verhindern und dieser vom Erdboden abgetrennt wird. Zur Entnahme der Probenkörper 7 wird die Sonde 1 mittels der Gelenkmanschette 25 gegenüber dem Hydraulikarm 4 verschwenkt. Anschließend können die beiden mit dem Boden gefüllten Hülsen 20,21 entnommen werden. Da diese direkt übereinander in der Sonde 1 angeordnet sind und jeweils eine Länge von 30 cm haben, erhält man mit dem erfindungsgemäßen Gerät mit einem Stich zwei Proben aus verschiedenen Bodenschichten, die weder durchmischt noch verdichtet, noch auf irgendeine andere Art und Weise durch die Probennahme in ihren ursprünglichen Eigenschaften verändert wurden. Die Hülsen 20,21 können nun verschlossen und einer Einzeluntersuchung im Labor zugeführt werden oder sie werden nach der obigen Vorschrift in jeweils einem, einer bestimmten Schichttiefe zugeordneten Probenbehälter 5 gesammelt. Der Traktor fährt dann zur nächsten, nach dem Probennahmeplan vorgesehenen Stichstelle und die Probennahme beginnt von vorne.

Der oben beschriebene Vorgang wiederholt sich, bis ein Probensatz vollständig ist. Anschließend werden die einen Probensatz enthaltenden Probenbehälter 5 gekennzeichnet und in jeweils einem, einer Bodenschicht zugeordneten Sammelbehälter 6 bis zur Weiterverarbeitung im Labor aufbewahrt.

Um die Probe am Ort der Probennahme laborgerecht aufzubereiten und das Transportvolumen zu verringern, kann z.B. ein Probensatz in der am Gestell 2 angebrachten Zerkleinerungs- 29 und Mischeinrichtung 34,35 zerkleinert und homogen durchmischt werden und daraus eine Probe zur Untersuchung vor Ort oder zur Laboruntersuchung, beispielsweise zur Stickstoffbestimmung, entnommen werden. Auf diese Weise lassen sich eine Reihe von bisher im Labor durchgeführten Probenaufbereitungen und Untersuchungen bereits am Ort der Probennahme durchführen.

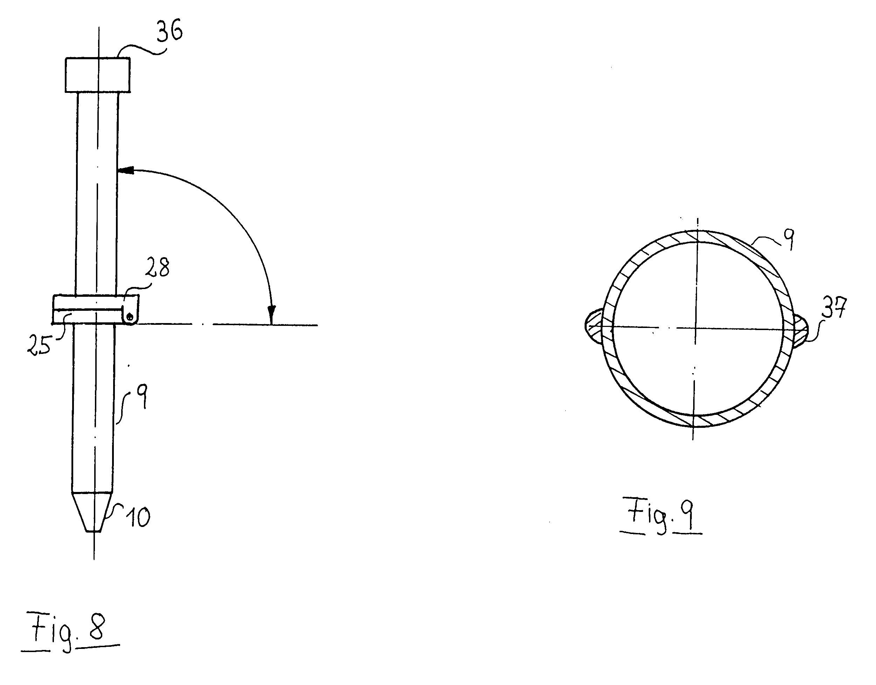

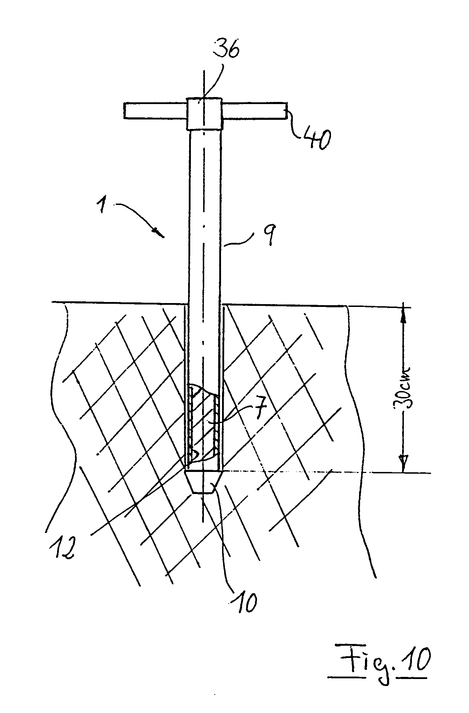

Die Fig. 8 und 9 zeigen ein vereinfachtes Ausführungsbeispiel eines Geräts zur Bodenprobenentnahme, das als sog. Handbohrstock dann Verwendung findet, wenn ein Eintreiben der Sonde von Hand, z.B. per Hammerschlag, möglich ist und nur vereinzelt Proben entnommen werden. Der Aufbau der Sonde 1 mit der Gelenkmanschette 25 und der daran angelenkten Handhabungseinrichtung 28 ist der gleiche, wie in den vorgehend beschriebenen Ausführungsbeispielen. An der Handhabungseinrichtung 28 ist in Verlängerung zu der Sonde 1 ein Schlagaufsatz 36 angebracht, über den die Sonde per Hammerschlag in das Erdreich eintreibbar ist. Am Außenumfang des Rohrmantels 9 sind in Axialrichtung Wülste 37 mit einem beispielsweise nahezu halbkreisförmigen Querschnitt angebracht. Vorzugsweise sind die Wülste 37 diametral gegenüberliegend angeordnet. Diese Wülste 37 bieten beim Eintreiben der Sonde 1 keinen nennenswerten Widerstand. Zur Herausziehen der Sonde 1 kann der Schlagaufsatz 36 um die Achse der Gelenkmanschette um ca. 90° verschwenkt werden. Durch den so entstehenden Hebel läßt sich die Sonde im Erdreich um ihre Längsachse verdrehen. Dabei wird das an den Außenumfang der Sonde 1 angrenzende Erdreich durch die Wülste 37 verdrängt und die Mantelfläche der Sonde freigeschnitten. Die Sonde läßt sich dann auch von Hand mühelos aus dem Boden herausziehen.

Fig. 10 zeigt ein weiteres bevorzugtes Ausführungsbeispiel der Erfindung, wobei die Sonde 1 wie in den Fig. 8,9 als Handbohrstock ausgebildet ist.

Der Handbohrstock gemäß Fig. 10 hat einen Rohrmantel 9, der in eine radial überstehende Spitze 10 übergeht, in die der Rohrmantel 9 eingeschraubt ist. Die Spitze 10 und der Rohrmantel 9 sind von einem Durchgangskanal 12 durchsetzt, der in einem Öffnungsquerschnitt 13 der Spitze 10 mündet. Am oberen Ende des Handbohrstocks 1 ist ein Schlagaufsatz 36 befestigt. Dieser ist von einer Querstange 40 durchdrungen, mittels der der Handbohrstock 1 zur Erleichterung des Herausziehens aus dem Erdreich um seine Längsachse drehbar ist.

Der mit der Spitze 10 versehene Rohrmantel 9 wird von einer Person, z.B. durch Hammerschläge auf eine gewünschte Tiefe von 30 cm in den Boden eingetrieben. Dabei schiebt sich der von dem Durchgangskanal 12 überdeckte Bodenkern, d.h. der Probenkörper 7 fortschreitend in das Innere des Rohrmantels 9. Nachdem die gewünschte Probentiefe erreicht ist, wird der Handbohrstock 1 mittels der Querstange 40 um seine Längsachse verdreht und aus der Probenbohrung herausgezogen.

Die Spitze 10 und der Schlagaufsatz 36 können anschließend von dem den Probenkörper 7 aufnehmenden Rohrmantel 9 entfernt und dieser mit Verschlußkappen (nicht gezeigt) verschlossen werden, so daß der Rohrmantel 9 im Unterschied zu den vorhergehenden Ausführungsbeispielen selbst als Behältnis für den Probenkörper 7 zum Transport zur Weiterverarbeitung bzw. zur Untersuchung ins Labor nutzbar ist.

Das Fußende 41 des Rohrmantels 9 ist mit einem Außengewinde in einen Montageabschnitt 17 der Spitze 10 eingeschraubt, so daß der Montageabschnitt 17 den Fußabschnitt des Rohrmantels 9 umgreift und radial über dessen Außenmantel übersteht. Im Übergangsbereich zwischen dem Rohrmantel 9 und dem Montageabschnitt 17 ist dessen Mantel zum kopfseitigen Ende des Handbohrstocks 1 hin verjüngt, so daß der Mantel des Montageabschnitts 17 allmählich in den Rohrmantel 9 übergeht. Der zylinderförmige Durchgangskanal 12 durchsetzt den Handbohrstock 1 in Axialrichtung. Um den Verschleiß und eine Verfälschung der Proben durch Korrosion der Sonde oder ähnliches zu minimieren, bestehen sowohl die Spitze 10 als auch der Rohrmantel 9 vorzugsweise aus Edelstahl. Der Kopf der Spitze 10 hat eine kegelstumpfförmige Mantelfläche mit einem Kegelwinkel von beispielsweise 24°, die an ihrem Öffnungsquerschnitt 13 mit der Wandung des Durchgangskanals 12 eine Schneide 14 bildet. Der Öffnungsquerschnitt 13 verläuft bei diesem Ausführungsbeispiel senkrecht zur Sondenachse.

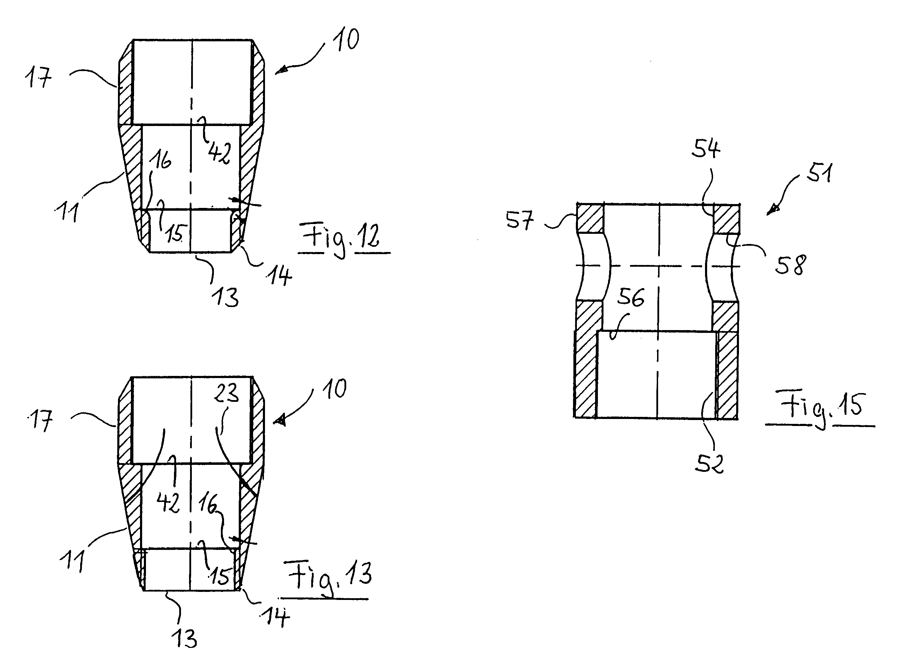

Um einen Stau des Probenkörpers 7 durch Reibung an der Umfangsfläche des Durchgangskanals 12 zu verhindern, ist dieser - wie den Fig. 12 und 13 entnehmbar - in einem vorbestimmten Abstand vom Öffnungsquerschnitt 13 über eine Radialschulter 15 erweitert. Zur Vergleichmäßigung des Fließens des Probenkörpers 7 im Inneren der Sonde ist die näher an der Sondenachse angeordnete Umfangskante 16 der Radialschulter 15 vorzugsweise mit einem Radius von beispielsweise 2 mm abgerundet.

Gemäß den Fig. 12 und 13 können je nach Bodenbeschaffenheit verschiedene Schneidenbreiten und Übergangsradien vorgesehen werden.

Der Durchgangskanal 12 (s. Fig. 12 und 13) ist im Bereich des Montageabschnitts 17 über eine Anlageschulter 42 nochmals gegenüber dem Öffnungsquerschnitt 13 und der Radialschulter 15 erweitert und mit einem Innengewinde versehen. Im eingeschraubten Zustand liegt das Fußende 41 des Rohrmantels 9 an der Anlageschulter 42 des Montageabschnitts 17 an.

Um zu vermeiden, daß der Probenkörper 7 beim Anheben des Handbohrstocks 1 aus diesem herausrutscht, kann in der Spitze 10 eine in den Durchgangskanal 12 ragende Rückschlageinrichtung 23 vorgesehen sein (s. Fig. 13). Vorzugsweise besteht diese bei hochviskosen Proben aus zwei bogenförmigen Federdrähten, die im Mantel der Spitze 10 verankert sind. Es ist jedoch auch möglich, die Rückschlageinrichtung 23 im Mantel des Rohrmantels 9 zu verankern.

Am kopfseitigen Ende 22 des Rohrmantels 9 ist eine Muffe 51 (s. Fig. 15) derart befestigt, daß sich die Durchgangsbohrung 54 der Muffe 51 an den Durchgangskanal 12 anschließt, wobei ein Innengewindeabschnitt 52 mit dem Außengewinde am kopfseitigen Ende 22 des Rohrmantels 9 in Eingriff steht. Dieser liegt mit seinem kopfseitigen Endabschnitt 22 an einer Schulter 56 der Durchgangsbohrung 54 an. Der von dem Rohrmantel 9 entfernte Abschnitt 57 der Muffe 51 ist mit einer quer zur Längsachse des Handbohrstocks 1 angeordneten Querbohrung 58 durchsetzt.

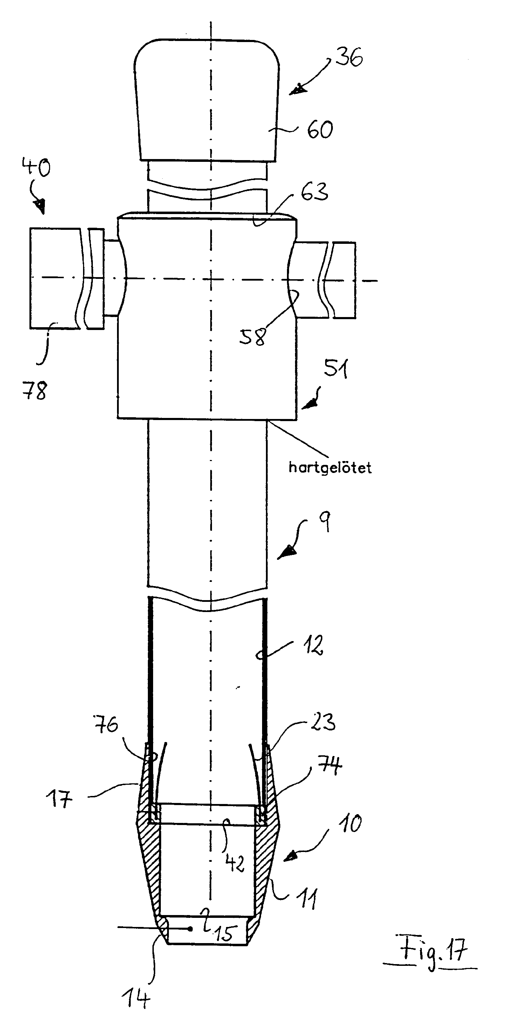

Wie aus Fig. 16 ersichtlich, hat der Schlagaufsatz 36 einen zylindrischen Schlagkopf 60, der radial gegenüber dem Außenumfang des Rohrmantels 9 erweitert ist. An den Schlagkopf 60 schließt sich in Richtung zur Spitze 10 ein Zapfen 62 an, der drehbar im Abschnitt 57 der Muffe 51 geführt ist. Der Schlagaufsatz 36 liegt im Einbauzustand mit einem Auflageabschnitt 63 des Schlagkopfs 60 auf dem Abschnitt 57 der Muffe 51 auf, wobei eine Radialbohrung 66 des Zapfens 62 fluchtend zur Querbohrung 58 ausrichtbar ist. Die Querstange 40 ist in der Radialbohrung 66 und in der Querbohrung 58 geführt und dient so als formschlüssiges Verbindungselement zwischen der Muffe 51 und dem Schlagaufsatz 36. An den Zapfen 62 schließt sich ein radial zurückgestufter Führungsabschnitt 68 an, der koaxial im Abstand zur Mantelfläche der Durchgangsbohrung 54 bzw. des Durchgangskanals 12 angeordnet ist. Dieser Führungsabschnitt 68 kann z.B. bei entferntem Schlagaufsatz 36 als Hilfsmittel zum Entformen des Probenkörpers 7 verwendet werden, indem er von dem Öffnungsquerschnitt 13 der Spitze 10 her in den Durchgangskanal 12 eingeführt wird und so der Probenkörper 7 im Durchgangskanal 12 zum kopfseitigen Ende des Handbohrstocks 1 verschiebbar ist.

Die beim Eintreiben des Handbohrstocks 1 auftretenden Kräfte werden über den Schlagaufsatz 36 und die Muffe 51 gleichmäßig über den Umfang verteilt in den Rohrmantel 9 eingeleitet, so daß dessen Wandstärke auf ein Minimum reduzierbar ist.

Der Rohrmantel 9 ist, wie bereits beschrieben, als Behältnis für den Transport des Probenkörpers verwendbar, so daß gegenüber dem Handbohrstock gemäß den Fig. 8,9 eine wesentliche Gewichtsverminderung erzielbar ist, da keine gesonderten Behältnisse zur Aufbewahrung des Probenkörpers 7 in den Handbohrstock 1 geführt werden müssen.

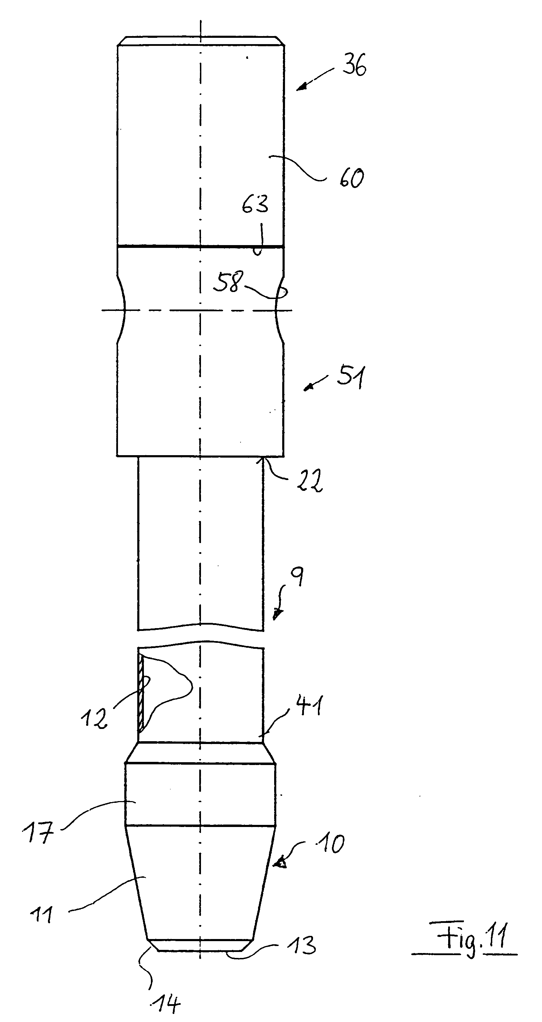

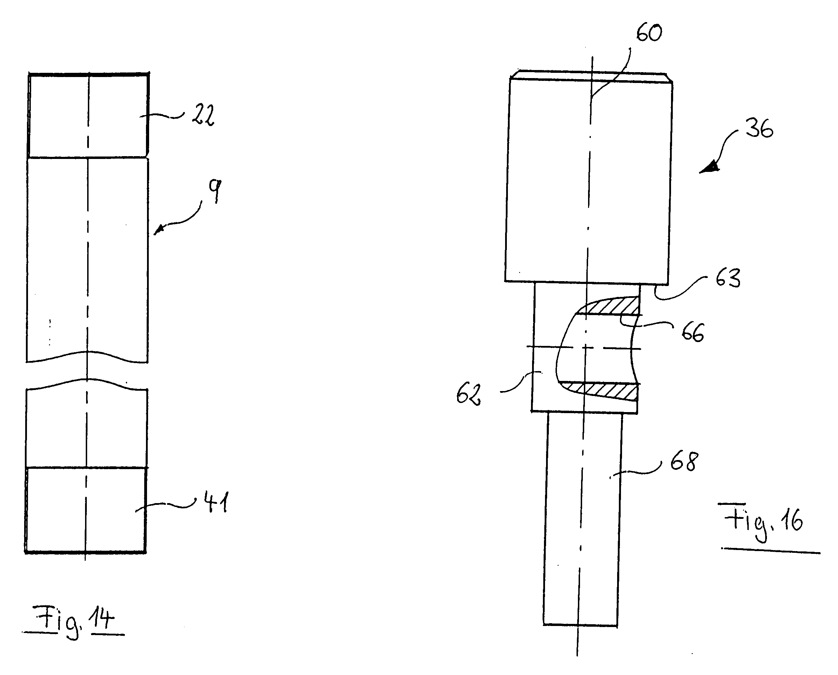

Fig. 17 zeigt ein weiteres bevorzugtes Ausführungsbeispiel eines erfindungsgemäßen Handbohrstocks. In den Fig. 17 bis 20 sind diejenigen Bauteile, die mit den Bauteilen des Handbohrstocks gemäß den Fig. 8,9 bis 17 identisch sind, mit gleichen Bezugszeichen versehen, so daß sich eine nochmalige Beschreibung dieser Elemente erübrigt.

Der Handbohrstock 1 gemäß den Fig. 17 bis 20 unterscheidet sich von den vorstehend beschriebenen Ausführungsformen unter anderem in der Ausgestaltung der Spitze 10. Diese weist im doppelkegelförmigen Übergangsbereich zwischen dem Kopf 11 und dem Montageabschnitt 17 acht gleichbeabstandete, am Umfang verteilte Nuten 70, mit einem im wesentlichen kreisförmigen Querschnitt auf. Die Scheitellinien 71 der Nuten 70 verlaufen parallel zu der Sondenachse und liegen radial außerhalb des Mantels des Rohrmantels 9. Aufgrund der doppelkegelförmigen Ausbildung des Kopfes 11 und des Montageabschnittes 17 und der geringen Tiefe der Nuten 70 laufen diese in der Mantelfläche des Kopfs 11 bzw. des Montageabschnitts 17 aus. Die Nuten können z.B. durch einen Fräsvorgang in die Spitze 10 gemäß den Fig. 12 und 13 eingearbeitet werden.

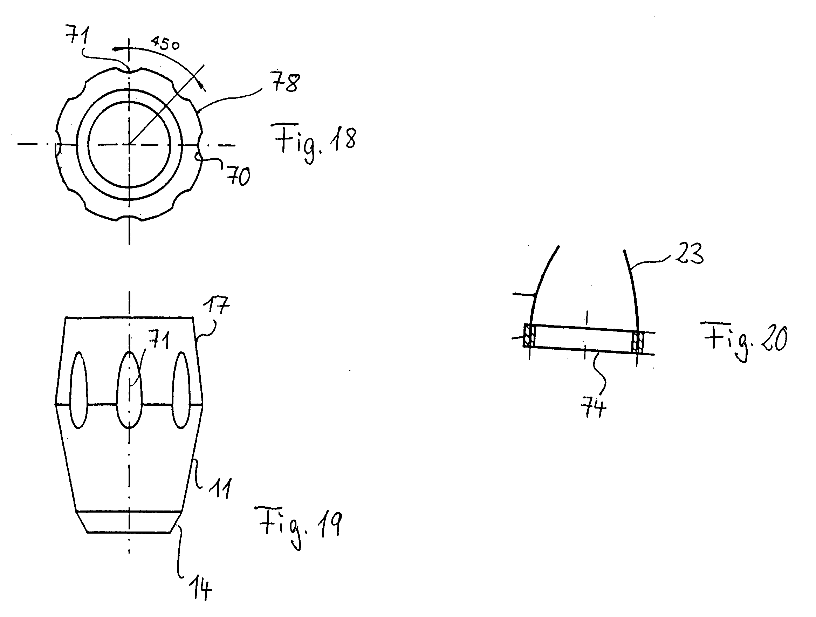

Die Ausbildung der Nuten 70 ist selbstverständlich nicht nur auf die in den Fig. 18 und 19 gezeigten Ausführungen beschränkt, sondern die Nuten können auch mit einer anderen geeigneten Querschnittsform (z.B. im wesentlichen rechteckförmig, dreieckförmig, elliptisch) und/oder in einem Winkel zur Sondenachse angestellt sein.

Die die Rückschlageinrichtung bildenden Federdrähte 23 sind bei dem in Rede stehenden Ausführungsbeispiel an einem Ringkörper 74 gemäß Fig. 20 befestigt. Dieser ist mit der von den Federdrähten 23 axial entfernten Stirnseite an der Anlageschulter 42 der Spitze 10 abgestützt, wobei der Außenumfang des Ringkörpers 74 radial in dem Gewindeabschnitt 76 des Montageabschnitts 17 geführt ist und dessen innerer Umfang im wesentlichen bündig mit der Durchgangsbohrung 12 der Spitze 10 abschließt. Die sich im wesentlichen in Axialrichtung erstreckenden Federdrähte 23 sind an einem radial innenliegenden Abschnitt des Ringkörpers 74 befestigt und bogenförmig zur Sondenachse hin gekrümmt. Das Fußende 41 des Rohrmantels 9 stützt sich im eingeschraubten Zustand an der die Federdrähte 23 tragenden Stirnseite des Ringkörpers 74 ab, wobei die Federdrähte 23 radial innerhalb des Mantels des Rohrmantels 9 aus der Stirnseite des Ringkörpers 74 münden. Dieser ist somit durch den Rohrmantel 9 und die Anlageschulter 42 in Axialrichtung festgelegt.

Wie aus der Fig. 17 ersichtlich ist, kann die Muffe 51 auch durch einen Schmelzvorgang, wie z.B. Hartlöten an dem Rohrmantel 9 befestigt sein. Die die Muffe 51 und den Schlagaufsatz 36 durchsetzende Querstange 40 kann an einem Endabschnitt eine zylinderförmige Erweiterung 78 aufweisen, die als Handgriff oder - falls die Querstange 36 als einseitiger Hebel benutzt wird - als Anschlag an den benachbarten Abschnitt der Muffe 51 dient.

Beim Eintreiben eines Handbohrstocks gemäß den Fig. 17,18 bilden sich durch die Nuten 70 im Mantel der entstehenden Probenbohrung radial nach innen vorstehende Vorsprünge aus Erdreich. Nach dem Erreichen der gewünschten Probentiefe wird der Handbohrstock mittels der Querstange 36 um die Sondenachse gedreht, so daß die Nuten 70 zwischen den Vorsprüngen angeordnet sind. Dabei wird der sich zu diesem Zeitpunkt zwischen den Nuten 70 befindliche Abschnitt der Vorsprünge durch die benachbarten Mantelabschnitte 78 der Sonde radial nach außen gedrängt, so daß das Erdreich aus den Nuten 70 verdrängt und entlang den benachbarten Mantelabschnitten der Probenbohrung verteilt wird. Beim Herausziehen der gegenüber der Eintreibstellung verdrehten Sonde kann Luft von dem Ringspalt zwischen dem Rohrmantel und der Probenbohrung durch die Nuten 70 in den sich unterhalb der Spitze 10 befindlichen Volumenanteil der Probenbohrung gelangen, so daß dieser Bereich entlüftet wird. Auf diese Weise wird die Bildung eines Vakuums unterhalb der Sondenspitze zuverlässig unterbunden, so daß weniger Kraft zum Herausziehen des Handbohrstocks benötigt wird. Diese Ausbildung des Handbohrstocks 1 kommt insbesondere bei Böden hoher Viskosität - wie z.B. Lehm - zum Tragen, da der Außenumfang der Spitze 10 bei derartigen Böden gasdicht am Mantel der Probenbohrung anliegen kann.

Im Fall, daß - z.B. bei sehr harten Böden - das sich in den Nuten 70 befindliche Erdreich bei der Drehung nicht verdrängt, sondern abgeschert wird, bleibt die Wirkung der Nuten 70 trotzdem erhalten, da das abgescherte Erdreich beim Herausziehen des Handbohrstocks 1 nach unten aus den Nuten austreten kann.

Da die Nuten 70 mit einer vergleichsweise geringen Tiefe am radial außenliegenden Teil der Spitze ausgebildet sind, ist beim Verdrehen und beim Herausziehen der Sonde nur ein sehr geringer Anteil an Erdreich zu verdrängen bzw. abzuscheren, so daß die zum Verdrehen aufzuwendende Kraft gegenüber einer ungenuteten Sonde nur geringfügig erhöht ist.

Da die Muffe 51 bei dem Ausführungsbeispiel gemäß Fig. 17 fest mit dem Rohrmantel 9 verbunden ist, verbleibt diese bei einer Nutzung des Rohrmantels 9 als Transportbehältnis auf diesem, wobei die kopfseitige Öffnung der Muffe 51 und der Fußabschnitt 41 des Rohrmantels 9 mit Verschlußkappen verschließbar sind.

Anstelle des Schlagaufsatzes 36 kann an der Muffe 51 oder an dem kopfseitigen Ende 22 des Rohrmantels 9 ein Adapter (nicht gezeigt) zum Anschluß einer Förderleitung z.B. eines Schlauchs angeschlossen werden, wodurch die Probenkörper 7 kontinuierlich einer sich anschließenden Weiterbehandlungsstufe oder einem Analyseschritt zugeführt werden können. Vorteilhafterweise wird in diesem Fall das Gerät zur Entnahme von Bodenproben in Verbindung mit einem an sich bekannten hydraulischen Handlingsgerät gemäß Fig. 1 benutzt.

Vorteilhafterweise wird der Rohrmantel 9 in einer Länge von ca. 900 mm ausgeführt, so daß bei einer üblichen Probentiefe von 30 cm noch ein ausreichend großer Abstand des Schlagkopfs 30 von der Bodenoberfläche gewährleistet ist, um das Eintreiben bzw. das Herausziehen des Handbohrstocks 1 zu erleichtern.

## Patentansprüche

1. Gerät zur Entnahme von Bodenproben, mit einer Sonde mit einem zylindrischen Rohrmantel (9), der am oberen Kopfende mit einer Handhabungseinrichtung (25;36) zum Eintreiben in den Boden versehen ist und der einen Aufnahmeraum für eine Bodenprobe bildet, der sich nach unten in einen zylindrischen Durchgangskanal (12) einer an dem Rohrmantel (9) lösbar anzubringenden Spitze (10) fortsetzt, die eine den Durchgangskanal (12) nach unten verengende Radialschulter (15) besitzt, oberhalb der eine Rückschlageinrichtung (23) für die Bodenprobe angeordnet ist, **dadurch** **gekennzeichnet,** **daß** die Rückschlageinrichtung durch zwei in den Aufnahmeraum ragende Federdrähte (23) gebildet ist und zumindest die näher an der Sondenachse angeordnete Umfangskante (16) der Radialschulter (15) abgerundet ist.

2. Gerät nach Patentanspruch 1, dadurch gekennzeichnet, daß die Umfangskante (16) mit einem Übergangsradius von 2 mm abgerundet ist.

3. Gerät nach Patentanspruch 1 oder 2, **dadurch gekennzeichnet,** daß die Spitze (10) aus einem mit dem Rohrmantel (9) in Eingriff stehenden Montageabschnitt (17) und einem Kopf (11) mit einer kegelstumpfförmigen Mantelfläche mit einem Kegelwinkel (8) von vorzugsweise 24 besteht, die an ihrem Öffnungsabschnitt (13) in eine Schneide (14) mit einem Schneidewinkel, vorzugsweise zwischen 30° und 45°, ausläuft, die durch eine Anfasung des Kopfs (11) der Spitze (10) gebildet ist.

4. Gerät nach Patentanspruch i bis 3, **dadurch gekennzeichnet,** daß der Montageabschnitt (17) ein radial rückgesetztes Außengewinde besitzt, das bis zum bündigen Anschluß des Kopfs (11) an den Rohrmantel (9) in dessen unteres Ende einschraubbar ist, wobei ein Abschnitt des Endquerschnitts (18) des Montageabschnitts (17) in eingeschraubtem Zustand zumindest teilweise radial über die Innenwandung des Rohrmantels (9) zur Sondenachse hin vorsteht, um einen Axialanschlag als Stützeinrichtung (18,28) für ein Behältnis (20,21) zur Probenaufnahme zu bilden.

5. Gerät nach Patentanspruch 1 bis 3, **dadurch gekennzeichnet,** daß die Spitze (10) im Übergangsbereich zum Rohrmantel (9) doppelkegelförmig radial nach außen erweitert ist und der Rohrmantel (9) als Behältnis zur Probenaufbewahrung nutzbar ist.

6. Gerät nach Patentanspruch 5, **dadurch gekennzeichnet,** daß ein Montageabschnitt (17) der Spitze (10) einen Endabschnitt (41) des Rohrmantels (9) umgreift und mit diesem in Gewindeeingriff steht, wobei der Endabschnitt (41) des Rohrmantels (9) bis zur bündigen Anlage an eine in dem Durchgangskanal (12) ausgebildete Anlageschulter (42) der Spitze (10) einschraubbar ist.

7. Gerät nach einem der vorhergehenden Patentansprüche, **dadurch** **gekennzeichnet,** daß die Schneide (14) in einem vorbestimmten Winkel zur Sondenachse angestellt ist.

8. Gerät nach einem der Patentansprüche 5 bis 7, **dadurch** **gekennzeichnet,** daß der sich unterhalb der Spitze (10) befindliche Volumenanteil der Probenbohrung mittels zumindest einer sich im wesentlichen in Axialrichtung erstreckenden Nut (70) entlüftbar ist, die im radial erweiterten Mantelabschnitt der Spitze (10) ausgebildet und zum Kopfende und zum Fußende der Sonde hin offen ist.

9. Gerät nach Patentanspruch 8, **dadurch gekennzeichnet,** daß die Nut (70) vorzugsweise einen im wesentlichen kreisbogenförmigen Querschnitt hat und die Scheitellinie (71) jeder Ausnehmung (70) radial außerhalb des Außenumfangs des Rohrmantels (9) liegt.

10. Gerät nach einem der vorhergehenden Patentansprüche, dadurch gekennzeichnet, daß die Federdrähte (23) im Mantel des Kopfs (11) der Spitze (10) befestigt sind.

11. Gerät nach einem der Patentansprüche 1 bis 9, dadurch gekennzeichnet, daß die Federdrähte (23) an einem Ringkörper (74) befestigt sind, der in der Durchgangsbohrung (12) an der Anlageschulter (42) abgestützt ist, wobei der Ringkörper (74) seinerseits vorzugsweise als Anlage für den Endabschnitt (41) des Rohrmantels (9) vorgesehen ist.

12. Gerät nach einem der vorhergehenden Patentansprüche, dadurch gekennzeichnet, daß das Behältnis (20,21) zur Probenaufnahme vom Kopfende des Rohrmantels (9) einführbar ist und aus einer oder mehreren formsteifen Hülsen (20,21) besteht, deren Länge jeweils vorzugsweise 30 cm beträgt.

13. Gerät nach einem der vorhergehenden Patentansprüche, dadurch gekennzeichnet, daß das Kopfende des Rohrmantels (9) mittels einer Gelenkmanschette (25) lösbar an einer Handhabungseinrichtung (28) angelenkt ist, mit der das obere Ende (22) durch Umklappen verschließbar ist.

14. Gerät nach Patentanspruch 13, dadurch gekennzeichnet, daß der obere Umfangsrand eines Behältnisses (20,21) zur Probenaufnahme bei verschlossener Sonde (1) an der der Gelenkmanschette (25) benachbarten Fläche der Handhabungseinrichtung (28) abgestützt ist, und das obere Ende des Rohrmantels (9) in einer Einsenkung (26) in der Gelenkmanschette (25) endet, wobei die Einsenkung (26) einen größeren Durchmesser hat als der Außendurchmesser des Rohrmantels (9).

15. Gerät nach Patentanspruch 13 oder 14, dadurch gekennzeichnet, daß die Handhabungseinrichtung (28) in Verlängerung der Sonde (1) einen Schlagaufsatz (36) zum Eintreiben der Sonde (1) von Hand hat und um etwa 90° gegenüber der Sonde in eine lösbare Sperrstellung verschwenkbar ist.

16. Gerät nach einem der Patentansprüche 1 bis 12, dadurch gekennzeichnet, daß am oberen Ende (22) des Rohrmantels (9) eine Muffe (51) vorgegeben ist, in der ein Schlagaufsatz (36) mit einem Zapfen (62) geführt ist, der mit einer radial erweiterten Schulter (63) auf einem Endabschnitt (57) der Muffe (51) aufliegt und die Muffe (51) und der Zapfen (62) von einer Radialbohrung (58,66) durchsetzt sind, in der eine Querstange (40) zum Ausdrehen der Sonde (1) aus dem Boden ansetzbar ist.

17. Gerät nach einem der vorhergehenden Patentansprüche, dadurch gekennzeichnet, daß die Handhabungseinrichtung (28) das Ende eines Betätigungszylinders (4) bildet, der seinerseits in einem Gestell (2) fixiert ist, das an einer verfahrbaren Einrichtung montierbar ist.

18. Gerät nach einem der vorhergehenden Patentansprüche, dadurch gekennzeichnet, daß der Rohrmantel (9) an seiner Außenfläche zumindest zwei in Axialrichtung durchgehende Wülste (37) hat, die um eine vorbestimmte Strecke, vorzugsweise 5 mm, etwa halbkreisförmig aus dem Rohrmantel (9) vorstehen.

19. Gerät insbesondere nach einem der vorhergehenden Patentansprüche, gekennzeichnet durch eine Zerkleinerungseinrichtung (29) zur Aufbereitung der Probenkörper (7), mit einem Gehäuse (30), in dem ein angetriebenes Zerkleinerungselement, vorzugsweise eine scheibenförmige Bürste (33), drehbar gelagert ist und das an seinem oberen Abschnitt eine trichterförmige Zuführöffnung (31) hat, wobei der untere Abschnitt des Gehäuses (30) in einen Mischbehälter (34) mit einer Mischeinheit (35) mündet.

20. Gerät, insbesondere nach einem der vorhergehenden Patentansprüche, gekennzeichnet durch die Ausbildung als Handbohrstock (1) mit einem Rohrmantel (9), der an seinem oberen offenen Kopfende einen abnehmbaren Schlagaufsatz (36) trägt, der von einer Querstange (40) radial durchsetzt ist und an dessen unterem Fußende eine radial über den Rohrmantel (9) überstehende Spitze (10) mit einem doppelkegelförmigen Mantel lösbar befestigt ist, in dem zumindest eine axiale Ausnehmung (70) zur Entlüftung des sich unter der Spitze (10) befindlichen Abschnitts der Probenbohrung ausgebildet ist, wobei der Rohrmantel (9) selbst als Behältnis zur Aufbewahrung der Probe (7) nutzbar ist und im Übergangsbereich zwischen Spitze (10) und Rohrmantel (9) eine aus zwei Federdrähten (23) bestehende Rückschlageinrichtung in den von dem Rohrmantel (9) gebildeten Aufnahmeraum ragt, der zum Öffnungsquerschnitt (13) der Spitze (10) hin über eine Radialschulter (15) verengt ist.

21. Rückschlageinrichtung für Sonden zur Bodenprobeentnahme, insbesondere nach einem der Patentansprüche 1 bis 19, gekennzeichnet durch zwei auf einem Umfangskreisbogen verteilten, im wesentlichen axial angeordneten Federdrähten (23), die in Richtung auf den Kreismittelpunkt hin gebogen sind.

22. Spitze für eine Sonde zur Entnahme von Bodenproben nach einem der Patentansprüche 1 bis 20, mit einem Durchgangskanal (12), der durch eine Radialschulter (15) verengt ist, dadurch gekennzeichnet, daß in der Spitze (10) zwei Federdrähte (23) als Rückschlageinrichtung vorgesehen sind und die näher an der Sondenachse angeordnete Umfangskante (16) der Radialschulter (15) abgerundet ist.

## Claims

1. A device for taking soil samples, comprising a probe having a cylindrical tubular jacket (9) which is provided at the upper end with an operating means (25, 36) for driving it into the ground and which forms a receiving chamber for a soil sample, which chamber continues downwards into a cylindrical passage (12) of a tip (10) detachably mountable to the tubular jacket (9), said tip having a radial shoulder (15) downwardly narrowing the passage (12), above which radial shoulder a retrieving means (23) for the soil sample is arranged, **characterized in that** the retrieving means is formed by two spring wires (23) projecting into the receiving chamber, and in that at least the circumferential edge (16) of the radial shoulder (15) being closer to the probe axis is rounded off.

2. A device according to claim 1, **characterized in that** the circumferential edge (16) is rounded off with a transition radius of 2 mm.

3. Apparatus according to claims 1 or 2, **characterized in that** the tip (10) consists of an assembly portion (17) engaged with the tubular jacket (9) and a head (11) having a surface in the shape of a truncated cone and having an angle of cone (β) of preferrably 24°, said surface ending at its opening portion (13) in a cutting edge (14) having a cutting angle preferrably between 30° and 45°, which cutting edge is formed by chamfering the head (11) of the tip (10).

4. A device according to claims 1 to 3, **characterized in that** the assembly portion (17) has an external thread which is set back radially and which can be screwed into the lower end of the tubular jacket (9) until the head (11) is flush therewith, wherein, in the screwed-in state, a portion of the end section (18) of the assembly portion (17) projects, at least partly, radially towards the probe axis over the inner wall of the tubular jacket (9) so as to form an axial stop as a support means (18, 28) for a container (20, 21) for receiving samples.

5. A device according to claims 1 to 3, **characterized in that** in the transition area between the tubular jacket (9) and the tip, said tip (10) is widened radially outwards shaped as a double cone, and in that the tubular jacket (9) can be used as a container for storing samples.

6. A device according to claim 5, **characterized in that** an assembly portion (17) of the tip (10) embraces an end portion (41) of the tubular jacket (9) and is threadably engaged therewith, wherein the end portion (41) of the tubular jacket (9) can be screwed in until it abuts flush with the abutment shoulder (42) of the tip (10) formed in the passage (12).

7. A device according to one of the preceding claims, **characterized in that** the cutting edge (14) is inclined at a predetermined angle with respect to the probe axis.

8. A device according to one of the claims 5 to 7, **characterized in that** the volume portion of the sample hole below the tip (10) can be vented by means of at least one groove (70) extending substantially in axial direction, which groove is formed in the radially widened surface portion of the tip (10) and is open towards the top and the base of the probe.

9. A device according to claim 8, **characterized in that** the groove (70) preferrably has a substantially circular cross section, and in that the zenithal line (71) of each groove (70) is located radially outside the outer circumference of the tubular jacket (9).

10. A device according to one of the preceding claims, **characterized in that** the spring wires (23) are fixed to the surface of the head (11) of the tip (10).

11. A device according to one of the claims 1 to 9, **characterized in that** the spring wires (23) are fixed to an annular body (74) which is supported in the passage (12) at the abutment shoulder (42), wherein, preferrably, the annular body is, in turn, provided as a stop for the end portion (41) of the tubular jacket (9).

12. A device according to one of the preceding claims, **characterized in that** the container (20, 21) for receiving samples is insertable from the top of the tubular jacket (9) and consists of one or a plurality of rigid sleeves (20, 21) having a length of preferrably 30 cm each.

13. A device according to one of the preceding claims, **characterized in that** the top of the tubular jacket (9) is detachably hinged, by way of a hinge means (25), at an operating means (28) by which the upper end (22) can be closed by means of folding.

14. A device according to claim 13, **characterized in that**, when the probe (1) is closed, the upper circumferential edge of a container (20, 21) for receiving samples is supported at the surface of the operating means (28) adjacent to the hinge means (25), and in that the upper end of the tubular jacket (9) ends in a depression (26) in the hinge means (25), wherein the depression (26) has a larger diameter than the outer diameter of the tubular jacket (9).

15. A device according to claim 13 or 14, **characterized in** **that** the operating means (28) as a longitudinal extension of the probe (1) has an drive headpiece (36) for driving in the probe (1) by hand and is tiltable by about 90 with respect to the probe into a releasable locking position.

16. A device according to one of the claims 1 to 12, **characterized in that** a sleeve (51) is provided at the upper end (22) of the tubular jacket (9), in which sleeve a drive headpiece (36) is guided by a pin (62), which pin abuts with a radially widened shoulder (63) against an end portion (57) of the sleeve (51), and the sleeve (51) and the pin (62) are penetrated by a radial bore (58, 66) into which a cross bar (40) can be inserted for turning the probe (1) out of the ground.

17. A device according to one of the preceding claims, **characterized in that** the operating means (28) forms the end of an actuating cylinder (4) which is, in turn, fixed to a support (2) which is mountable to a displaceable means.

18. A device according to one of the preceding claims, **characterized in that** the tubular jacket (9) has, at its outer surface, at least two elevations (37) continuously extending in axial direction, which elevations project in an about semicircular shape from the tubular jacket (9) by a predetermined distance, preferrably 5 mm.

19. A device particularly according to one of the preceding claims, **characterized by** a crushing means (29) for preparing the sample body (7), comprising a housing (30) in which a driven crushing element, preferrably a disk-shaped brush (33), is rotatably supported and which has, at its upper portion, a funnel-shaped feeding opening (31), wherein the lower portion of the housing (30) opens into a mixing container (34) having a mixing unit (35).

20. A device particularly according to one of the preceding claims, **characterized by** the design as a hand-operated drilling rod (1) comprising a tubular jacket (9), which rod carries, at its upper open end, a detachable drive headpiece (36) which is radially penetrated by a cross bar (40), and to the lower end whereof a tip (10) having a surface shaped as a double cone and projecting radially over the tubular jacket (9) is detachably fixed, and in which at least one axial groove (70) is formed for venting the portion of the sample hole located below the tip (10), wherein the tubular jacket (9) itself can be used as a container for storing the sample (7), and in the transition portion between the tip (10) and the tubular jacket (9) a retrieving means consisting of two spring wires (23) projects into the receiving chamber formed by the tubular jacket (9), said receiving chamber being narrowed towards the opening section (13) of the tip (10) by a radial shoulder (15).

21. A retrieving means for probes for taking soil samples, in particular according to one of the claims 1 to 19, **characterized by** two spring wires (23) arranged on a circumferential circle substantially axially, and which are bent in direction towards the centre of the circle.

22. A tip for a probe for taking soil samples according to one of the claims 1 to 20, comprising a passage (12) which is narrowed by a radial shoulder (15), **characterized in that** two spring wires (23) are provided in the tip (10) as a retrieving means, and in that the circumferential edge (16) of the radial shoulder (15) being closer to the probe axis is rounded off.

## Revendications

1. Carottier comportant une sonde avec une enveloppe tubulaire cylindrique (9) qui est pourvue à sa tête d'extrémité supérieure d'un dispositif de manutention (25/36) pour l'enfoncer dans le sol, et qui forme un logement pour une carotte du sol, qui se prolonge vers le bas par un canal cylindrique de passage (12) d'une pointe (10), pouvant être montée de façon amovible sur l'enveloppe tubulaire (9), qui comporte un épaulement radial (15) rétrécissant le canal de passage (12) vers le bas, au-dessus de laquelle est disposé un dispositif anti-retour (23) pour la carotte caractérisé en ce que le dispositif anti-retour est constitué par deux fils formant ressort (23) dépassant dans le logement et en ce qu'au moins l'arête périphérique (16) de l'épaulement radial (15) disposée plus prés de l'axe de la sonde est arrondie.

2. Carottier selon la revendication 1 caractérisé en ce que l'arête périphérique (16) est arrondie avec un rayon de transition de 2 mm.

3. Carottier selon la revendication 1 ou 2 caractérisé en ce que la pointe (10) est constituée par une pièce de montage (17) en prise avec l'enveloppe tubulaire et par une tête (11) avec une surface latérale de tronc de cône d'un angle au sommet de 24°, qui, à sa section d'ouverture (13), évolue en une lame (14), avec un angle de coupe situé de préférence entre 30° et 45°, qui est formée par un chanfreinage de la tête (11) de la pointe (10).

4. Carottier selon les revendications 1 à 3 caractérisé en ce que la pièce de montage (17) présente un filetage décalé radialement qui peut être vissé, jusqu'à l'obtention de la liaison étroite de la tête (11) sur l'enveloppe tubulaire (9) dans la partie inférieure de celle-ci, une partie de la section droite terminale (18) de la pièce de montage (17) faisant saillie au moins en partie radialement, au-delà de la paroi interne de l'enveloppe tubulaire (9) vers l'axe de la sonde pour former une butée axiale en dispositif d'appui (18,28) pour un récipient (20,21) afin de recevoir la carotte.

5. Carottier selon les revendications 1 à 3 caractérisé en ce que la pointe (10) s'élargit radialement vers l'extérieur en double cône dans la zone de transition vers l'enveloppe tubulaire (9) et en ce que l'enveloppe tubulaire (9) est utilisable comme récipient pour conserver la carotte.

6. Carottier selon la revendication 5 caractérisé en ce que la pièce de montage (17) de la pointe (10) entoure une partie terminale (41) de l'enveloppe tubulaire (9) et est reliée à celle-ci par vissage, la partie terminale (41) de l'enveloppe tubulaire (9) pouvant être vissée jusqu'à s'appuyer étroitement contre un épaulement d'appui (42) formé dans le canal de passage (12) de la pointe (10).

7. Carottier selon l'une des revendication précédentes caractérisé en ce que la lame (14) est réglée sur un angle prédéterminé par rapport à l'axe de la sonde.

8. Carottier selon l'une des revendications 5 à 7 caractérisé en ce que la partie de volume du perçage à carottes se trouvant au-dessous de la pointe (10) peut être désaérée au moyen d'au moins une rainure (70) s'étendant essentiellement en direction axiale, formée dans la partie d'enveloppe élargie de la pointe (10), et s'ouvrant vers l'extrémité de tête et l'extrémité de pied de la sonde.

9. Carottier selon la revendication 8 caractérisé en ce que la rainure (70) a de préférence une section de forme générale en arc de cercle et que la ligne et en ce que la ligne de fond (71) de chaque rainure (70) se trouve radialement à l'extérieur de la périphérie extérieure de l'enveloppe tubulaire (9).

10. Carottier selon l'une des revendications précédentes caractérisé en ce que les fils formant ressorts (23) sont fixés dans l'enveloppe de la tête (11) de la pointe (10).

11. Carottier selon l'une des revendications 1 à 9 caractérisé en ce que les fils formant ressorts (23) sont fixés sur un corps annulaire (74) qui s'appuie contre l'épaulement d'appui (42) dans le perçage de passage (12), ce corps annulaire (74) étant prévu pour sa part avantageusement comme appui pour la partie terminale (41) de l'enveloppe tubulaire (9).

12. Carottier selon l'une des revendications précédentes caractérisé en ce que le récipient (20,21) peut être introduit depuis l'extrémité de tête de l'enveloppe tubulaire pour recevoir la carotte et est constitué d'une ou plusieurs douilles rigides (20,21) dont la longueur respective est de préférence de 30 cm.

13. Carottier selon l'une des revendications précédentes caractérisé en ce que l'extrémité de tête de l'enveloppe tubulaire (9) est articulée au moyen d'un manchon d'articulation (25), de façon amovible, à un dispositif de manipulation (28) avec lequel l'extrémité supérieure (22) peut être obturée par basculement.

14. Carottier selon la revendication 13 caractérisé en ce que la bordure périphérique supérieure d'un récipient (20,21) pour recevoir la carotte lorsque la sonde (1) est fermée s'appuie sur la surface du dispositif de manipulation (28) voisine du manchon d'articulation (25) et en ce que l'extrémité supérieure de l'enveloppe tubulaire (9) se termine dans un évidement (26) du manchon d'articulation (25), l'évidement (26) ayant un diamètre plus important que le diamètre extérieur de l'enveloppe tubulaire (9).

15. Carottier selon la revendication 13 ou 14 caractérisé en ce que le dispositif de manipulation (28) a, dans le prolongement de la sonde (1) une tête de percussion (36) pour l 'entraînement de la sonde (1) à la main et peut être basculé de 90° environ par rapport à la sonde dans une position de blocage pouvant être supprimée.

16. Carottier selon l'une des revendications 1 à 12 caractérisé en ce qu'à l'extrémité supérieure (22) de l'enveloppe tubulaire (9) il est prévu un manchon (51) dans lequel une tête de percussion (36) avec un axe (62) est guidée, qui repose par un épaulement radialement élargi (63) sur une section d'extrémité (57) du manchon (51) et en ce que le manchon (51) et l'axe (62) sont traversés par un perçage radial (58,66) dans lequel une barre transversale (40) peut être introduite pour dévisser la sonde (1) du sol.

17. Carottier selon l'une des revendications précédentes caractérisé en ce que le dispositif de manipulation (28) forme l'extrémité d'un vérin d'actionnement (4) qui est fixé à son tour sur un bâti (2), monté sur une installation mobile.

18. Carottier selon l'une des revendications précédentes caractérisé en ce que l'enveloppe tubulaire (9) présente sur sa surface extérieure au moins deux bourrelets (37) s'étendant en direction axiale, qui font saillie d'une certaine hauteur, de préférence 5 mm, à peu près en demi cercle, au-dessus de l'enveloppe tubulaire (9).

19. Carottier selon l'une des revendications précédentes caractérisé par un dispositif d'émiettage (29) pour la préparation de la carotte (7) avec un boîtier (30) dans lequel un élément d'émiettage entraîné, de préférence une brosse en forme de disque (33), est monté rotatif et qui a à sa section supérieure une ouverture d'introduction en forme de trémie (31), la section inférieure du boîtier (30) débouchant dans un conteneur à mélange (34) comportant une unité de mélange (35).

20. Carottier selon l'une des revendications précédentes caractérisé par une configuration en tarot manuel (1) avec une enveloppe tubulaire (9), qui porte à son extrémité de tête supérieure ouverte une tête de percussion (36) amovible, traversée radialement par une barre transversale (40) et à l'extrémité de pied inférieure duquel est fixée de façon amovible une pointe (10) dépassant radialement au-dessus de l'enveloppe tubulaire (9) avec une enveloppe en forme de double cône, dans laquelle est pratiqué au moins un évidement axial (70) pour le désaérage de la section du perçage à carottes se trouvant sous la pointe (10), l'enveloppe tubulaire (9) étant elle-même utilisable comme récipient pour conserver la carotte (7) et un dispositif anti-retour constitué de deux fils formant ressort (23) dépassant , dans la zone de transition entre la pointe (10) et l'enveloppe (9), dans le logement formé par l'enveloppe tubulaire (9) qui se rétrécit vers la section d'ouverture (13) de la pointe (10) par un épaulement radial (15).

21. Dispositif anti-retour pour des sondes destinées à prélever des carottes, notamment selon l'une des revendications 1 à 19 caractérisé par deux fils formant ressort (23) répartis sur un arc de cercle périphérique, disposés essentiellement axialement et recourbés en direction du centre du cercle.

22. Pointe pour sonde pour prélever des carottes selon l'une des revendications 1 à 20, avec un canal de passage (12) qui est rétréci par un épaulement radial (15) caractérisé en ce que dans la pointe (10) sont prévus deux fils formant ressort (23) en tant que dispositif anti-retour et en ce que l'arête périphérique (16) de l'épaulement radial (15) disposée plus près de l'axe de la sonde est incurvée.
